Europäisches Patentamt

European Patent Office

Office européen des brevets

(11) Numéro de publication: **0 421 907 A1**

## (12) DEMANDE DE BREVET EUROPEEN

(21) Numéro de dépôt: **90470046.5**

(22) Date de dépôt: **16.08.90**

(51) Int. Cl.5: **A61C 1/14**

(30) Priorité: 08.09.89 FR 8911945
23.11.89 FR 8915596
07.09.89 FR 8911866

(43) Date de publication de la demande:
**10.04.91 Bulletin 91/15**

(84) Etats contractants désignés:
**AT CH DE FR LI**

(71) Demandeur: **MICRO MEGA S.A.**

5-12, rue du Tunnel
**F-25000 Besançon(FR)**

(72) Inventeur: **Pernot, Jacques**
**Chemin de Merey, Vieilley**
**F-25870 Geneville(FR)**

(74) Mandataire: **Poupon, Michel**
**3, rue Thiers BP 421**
**F-88011 Epinal Cédex(FR)**

(54) **Dispositif de serrage, respectivement de desserrage, de la queue de fraise d'un instrument de dentisterie.**

(57) Dispositif de commande par bouton-poussoir de serrage, respectivement de desserrage, de la queue de fraise d'un instrument de dentisterie dans la tête d'un contre-angle ou d'une pièce à main ; le déplacement de bouton-poussoir étant opéré à l'encontre d'une ressort de pression, caractérisé en ce qu'il comporte au moins un elément d'inversion (13,27) recevant le mouvement d'appui sur le bouton poussoir (11) pour le desserrage et le transformant en un mouvement de traction exercé par l'élément d'inversion sur un poussoir (10) commandant une pince de serrage maintenant la queue de l'instrument.

FIG. 1

EP 0 421 907 A1

## DISPOSITIF DE SERRAGE, RESPECTIVEMENT DE DESSERRAGE, DE LA QUEUE DE FRAISE D'UN INSTRU-MENT DE DENTISTERIE

La présente invention a pour objet un dispositif de commande par bouton-poussoir de serrage, respectivement de desserrage, de la queue de fraise d'un instrument de dentisterie dans la tête d'un contre-angle ou d'une pièce à main, le déplacement du bouton-poussoir étant opéré à l'encontre d'un ressort de pression.

Dans les dispositifs généralement connus un ou plusieurs ressorts assure la tenue du serrage. Le desserrage est permis par la compression ou la détente dudit ressort grâce au mouvement de haut en bas d'une des extrémités du ressort et ce par l'intermédiaire de différents organes mécaniques. Ce mouvement de haut en bas est dans le même sens que celui imprimé au bouton pression pour commander le desserrage.

Il en résulte les problèmes suivants :
- il est peu pratique d'assurer une démultiplication afin que l'effort à exercer sur le bouton soit réduit, ce qui conduit à adopter un compromis dans le choix du ressort de maintien de serrage, ce qui ne permet pas d'assurer un grand effort de serrage ;
- la course du bouton poussoir dans l'action de desserrage est en relation directe avec celle des organes de serrage ; elle est donc en général faible, ce qui n'est pas favorable à une bonne sensibilité d'action de l'opération et constitue un facteur de risque de desserrage accidentel dû à une faible action sur le bouton poussoir.

L'invention a pour objet de remédier à ces inconvénients des dispositifs de l'art antérieur en proposant un dispositif permettant une course du bouton poussoir importante, une démultiplication de l'effort et enfin un dispositif de serrage qui est d'autant plus efficace que l'on exerce un effort de traction sur l'instrument.

Conformément à l'invention, ce résultat est obtenu avec un dispositif de commande par bouton poussoir de serrage, respectivement de desserrage, de la queue de fraise d'un instrument de dentisterie dans la tête d'un contre-angle ou d'une pièce à main, le déplacement du bouton poussoir étant opéré à l'encontre d'un ressort de pression, caractérisé en ce qu'il comporte au moins un élément d'inversion recevant le mouvement d'appui sur le bouton poussoir pour le desserrage et le transformant en un mouvement de traction exercé par l'élément d'inversion sur un poussoir commandant un pince de serrage maintenant la queue de l'instrument.

Avantageusement, ledit élément sera un élément basculant type levier.

D'autres objets et caractéristiques de l'invention ressortiront de la description faite ci-après de quelques exemples de mise en oeuvre donnés à titre d'exemples non limitatifs, en référence aux dessins annexés dans lesquels :
- la figure 1 est une vue en coupe d'une tête comportant un dispositif conforme à l'invention, avec vue en position de serrage en demi-coupe gauche et vue en position de desserrage en demi-coupe droite ;
- la figure 2 est une vue schématique en demi-coupe d'un levier avec point d'appui sur une bille ;
- la figure 3 est une vue schématique en demi-coupe d'un levier type clavette bateau ;
- la figure 4 est une vue schématique en demi-coupe d'un levier type fléau ;
- la figure 5 est une variante avec un système à billes ;
- la figure 6 est une variante vue en coupe d'une tête de pièce à main équipée d'un dispositif de serrage et de desserrage respectivement en position de serrage en demi-coupe gauche et en position de desserrage en demi-coupe droite ;
- la figure 7 est une variante de la figure 6 en coupe d'une tête de pièce à main équipée du dispositif respectivement en position de serrage en demi-coupe gauche et en position de desserrage en demi-coupe droite, selon une seconde variante, avec en figure 7A une coupe transversale selon A-A ;
- les figures 8 à 11 et 8A à 11A sont quatre autres variantes de mise en oeuvre, en représentation identiques à celle de la figure 7, avec en outre des coupes selon B-B représentées en figures 10B et 11B ;
- la figure 12C est une vue de la figure 12 en coupe C-C ;

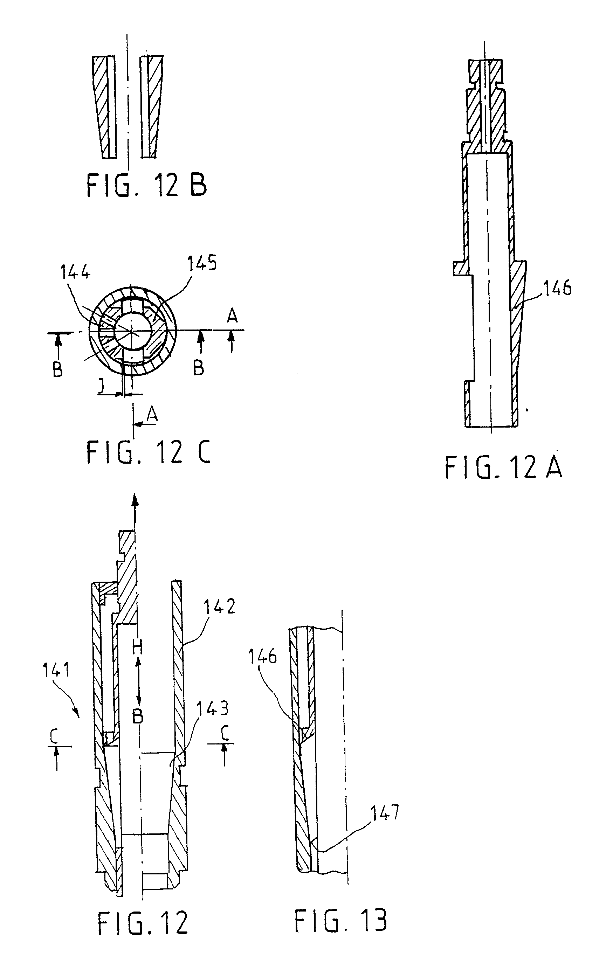

- la figure 12B est une vue de la figure 12C en coupe B-B ;
- la figure 12A est une vue de la figure 12C en coupe A-A ;
- la figure 13 est une variante en coupe du dispositif de serrage à l'intérieur du fût.

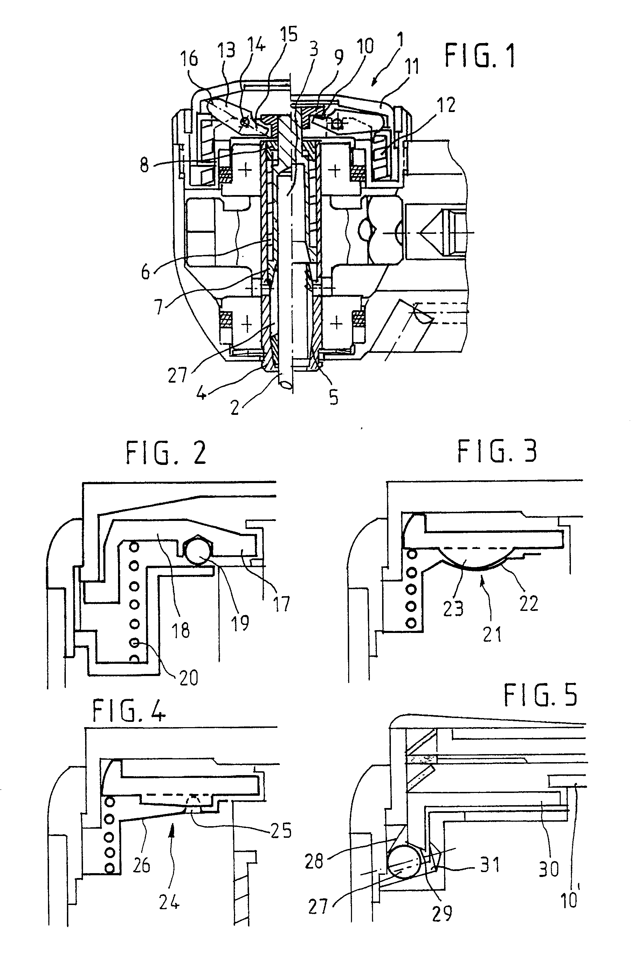

La figure 1 représente une tête de contre-angle référencée (1) destinée à recevoir un instrument de dentisterie (2) dont la queue (3) est insérée dans un fût (4) de ladite tête (1).

Le manche est maintenu par une pince (5) de serrage sollicitée par un ressort de pression (6), par exemple hélicoïdal, qui prend appui d'une part sur une embase (7) mobile et d'autre part sur un siège (8).

Conformément à l'invention, on prévoit dans la tête une pièce annulaire mobile (9) comportant un épaulement du poussoir (10), ladite pièce étant solidaire en translation de l'embase (7). On comprend que le déplacement axial de l'équipage (7,9,10) entraine la compression ou la détente du ressort, donc la libération ou le blocage du manche de l'instrument qui est maintenu par la pince (5).

Le déplacement de l'ensemble (7,9,10) est commandé par un bouton poussoir (1) se déplaçant à l'encontre de l'effort d'un ressort de rappel en position sortie (12).

La liaison entre le bouton (11) et l'ensemble (7,9,10) est réalisée à la figure 1, par au moins un levier (13) articulé sur un axe (14). Le levier et la démultiplication sont tels que le déplacement du bouton est grand par rapport à la course nécessaire de l'ensemble (7,9,10), c'est-à-dire que le petit bras (15) du levier sollicitera l'épaulement (10), tandis que le grand bras (16) sera soumis à l'action du bouton poussoir, sur la face intérieure de celui-ci.

Le dispositif pourra comporter plusieurs leviers de ce type, répartis de manière symétrique.

Le dispositif de la figure 2 est équivalent, avec un petit bras (17), un grand bras (18) et un point d'appui qui est une bille (19). Dans cette structure le ressort (20), équivalent au ressort (12), prend appui sur le grand bras (18), celui-ci étant lui-même sollicité par le bouton-poussoir.

A la figure 3, le levier est de type clavette bateau (21) c'est-à-dire comportant une cuvette (22) dans laquelle roule une rotule (23). De préférence les clavettes-bateau sont prolongées par un bras assurant le décentrage des points de contacts par rapport à l'axe fictif de rotation.

Tous les autres éléments sont identiques à ceux des réalisations précédentes.

Pour parfaire les résultats ainsi obtenus, il faut tenir compte du fait que les vitesses de rotation élevées atteintes actuellement par les pièces à main dentaires imposent que les composants en mouvement soient correctement équilibrés, afin de supprimer les risques de détérioration des roulements à billes par exemple.

Le dispositif de serrage des instruments est un des éléments les plus sensibles car étant en fin de chaine cinématique il tourne à la vitesse maximum. Pour lui conférer de bonnes conditions d'équilibrage, c'est-à-dire réduire le plus possible les effets de balourd on cherche à lui donner une inertie la plus faible possible, ce qui doit se traduire par des formes de révolution de diamètre le plus faible possible, tout en assurant un serrage suffisant de l'instrument.

Parmi les dispositifs existants on connaît par exemple celui décrit dans la demande de brevet publiée sous le n° 2 576 775 qui a l'inconvénient d'avoir des pièces mobiles dont on ne peut s'assurer qu'elles reprennent systématiquement la même position après chaque actionnement du dispositif, ce qui se traduit par un risque de perte des conditions d'équilibrage. On connaît également du brevet n° 2 336 593 un dispositif qui peut être à une ou deux pièces de serrage qui par sa construction assure un effort de serrage constant dépendant de la qualité du ressort qui l'équipe.

L'invention a pour objet de proposer un dispositif de serrage et de desserrage de forme de révolution qui offre une grande sécurité de serrage et un maintien optimal à toutes les vitesses de rotation, sans risque de détérioration des éléments constitutifs de la tête de la pièce à main.

Conformément à l'invention, ce résultat est obtenu avec un dispositif de serrage et de desserrage de la queue d'un instrument dentaire dans la tête de pièce à main de dentisterie, dispositif du type dans lequel la queue de l'instrument est insérée dans un fût à l'intérieur duquel elle est maintenue par une pince de serrage, caractérisé en ce que la pince de serrage est actionnée par une rampe de forme correspondante solidaire d'un poussoir mobile en translation à l'intérieur du fût et dont le déplacement est commandé directement ou indirectement par un bouton-poussoir actionné par l'utilisateur, le poussoir étant rappelé par un ressort de compression prenant appui d'une part sur une embase solidaire du poussoir et d'autre part sur un siège fixe solidaire du fût.

Selon une caractéristique essentielle de l'invention, on prévoit que le desserrage se fait par traction sur le poussoir de pince.

Ce dispositif offre une grande sécurité de serrage dans la mesure où lorsque le praticien travaille en traction sur l'instrument l'effort de serrage s'accroît avec l'effort de traction, évitant ainsi tout risque de perte de l'instrument dans la bouche du patient.

Bien entendu, le bouton-poussoir de commande sera du type décrit précédemment.

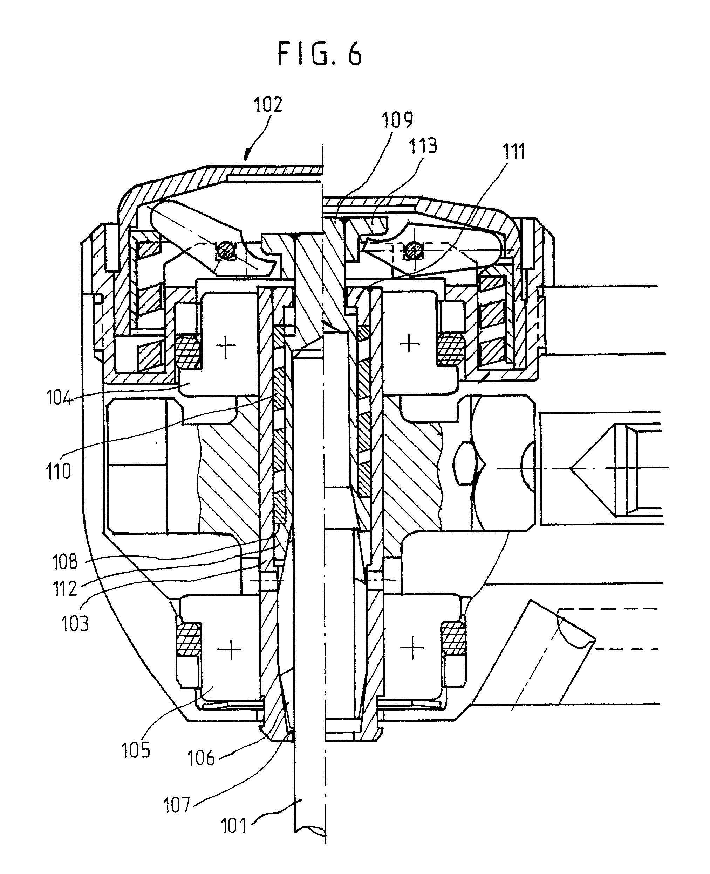

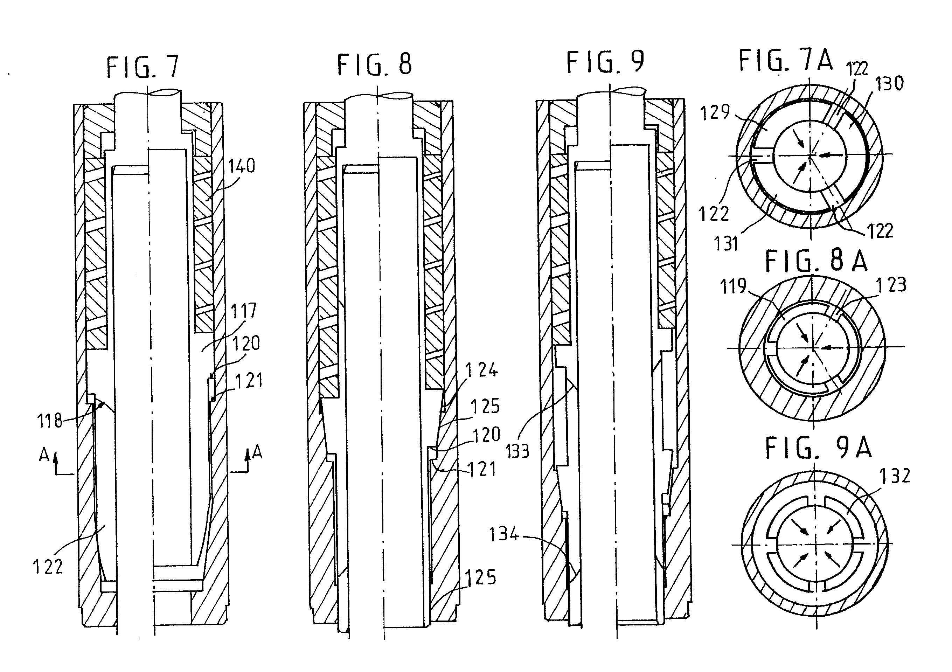

On se réfère à la figure 6.

La queue (101) d'un instrument de dentisterie est insérée dans la tête (102) de la pièce à main essentiellement à l'intérieur d'un fût cylindrique (103) fixe en translation mais mobile en rotation par des paliers (104,105).

La queue (101) est maintenue par au moins une pince de serrage (106) de forme générale conique. La partie basse de la pince coopère avec une rampe (107) fixe de forme correspondante ménagée dans le fond du fût, sur sa face interne.

La partie supérieure de la pince coopère avec une rampe (108) mobile en translation ménagée sur la face frontale d'un poussoir (109) mobile en translation à l'intérieur du fût et dont la structure sera explicitée ultérieurement.

La pince de serrage sera réalisée par fendage longitudinal partiel d'un corps creux de révolution. Elle sera avantageusement symétrique.

On pourrait également prévoir de munir le dispositif de deux pinces de ce type, montées en série l'une au dessus de l'autre.

On décrira maintenant la structure du poussoir (109).

Celui-ci est de forme générale cylindrique.

Il est mobile en translation dans le fût et recouvre partiellement la queue (101) de l'instrument dentaire. Le déplacement s'opère à l'encontre d'un ressort de compression (110) qui prend appui d'une part en partie haute sur un siège (111) solidaire du fût et d'autre part en partie basse sur une embase (112) solidaire du poussoir, venue de matière avec celui-ci.

Cette structure montre que le desserrage de la queue de l'instrument, c'est-à-dire la libération de la pince de serrage, est obtenu par une traction effectuée sur le poussoir, ce qui est tout à fait original.

A cette fin la partie supérieure du poussoir sortant du fût est munie par exemple d'un épaulement (113) rapporté sur celui-ci ou venu de matière avec le poussoir. Une traction effectuée sur l'épaulement entraine le poussoir vers le haut en comprimant le ressort (110) et libère donc la pince de serrage pour permettre de dégager l'instrument ou d'en placer un dans la tête de la pièce à main.

La tête sera munie d'un dispositif permettant de transformer le mouvement de déplacement du bouton-poussoir de la tête de la pièce à main en un mouvement inverse du poussoir, identique à celui précédemment décrit.

Selon une variante de mise en oeuvre, le fût est pourvu de perçages permettant à la pression régnant éventuellement dans la pièce à main de s'établir à l'intérieur du dispositif de serrage afin d'éviter la pénétration d'éléments polluants ou de salissures.

Selon une autre variante de mise en oeuvre, la pince sera une pince de serrage unique et sera monobloc avec le poussoir.

En variante à la structure de pince à serrage unique et monobloc avec le poussoir, on a pensé qu'il était en outre utile de limiter la déformation de la pince lorsque cette dernière est en position serrée en l'absence de queue d'instrument pour éviter une déformation permanente des bras de serrage.

On propose à cette fin une variante au dispositif de serrage et de desserrage de la queue d'un instrument dentaire dans la tête d'une pièce à main de dentisterie, caractérisé en ce que la pince est pourvue d'une butée coopérant avec une forme combinée du fût, afin de limiter la course de la pince dans le sens du serrage.

On se référera aux figures 7 à 11.

On se réfère tout d'abord à la figure 7.

La pince de serrage (117) est monobloc avec le poussoir. Elle est sollicitée par un ressort usiné (140) équilibré, disposé concentriquement au poussoir autour de celui-ci.

De préférence sa longueur sera un multiple du pas.

Selon cette variante, la pince comporte une butée (120) annulaire qui limite la charge ou la sollicitation de la pince dans le cas où il n'y a pas de queue d'instrument introduite dans ladite pince.

La butée (120) coopère avec un épaulement annulaire (121) de forme correspondante du fût.

Comme cela ressort de la coupe de la figure 7A, la pince se compose de par exemple trois languettes (129,130,131) déterminant entre elles trois fendages longitudinaux (122).

Les languettes de serrage sont articulées à la limite supérieure des fentes axiales en un point (118).

Dans cette structure, le coincement de l'extrémité de la pince sur son siège s'efface grâce à la mobilité de la pince par rapport à son siège.

Elle peut donc admettre des sièges de faibles conicités d'où un serrage plus efficace.

Les fendages longitudinaux, dans cette variante, débouchent aux extrémités de la pince, en particulier lorsque la pince est une pince simple asymétrique.

Dans la variante des figures 8 et 8A, les fendages (123) sont réalisés sur une partie de la pince, sans déboucher aux extrémités de ladite pince.

Dans ce cas on prévoit, toutes choses égales par ailleurs par rapport à la réalisation de la figure 7, que la pince est pourvue d'une forme généralement conique (124) située dans la partie médiane par rapport aux fendages, ladite forme conique (124) coopérant avec une forme conique combinée (125) du fût pour assurer le serrage par déformation des bras (119) définis par les fendages (123).

Outre les avantages de la réalisation précédente, on note que la tige de la fraise ne coopère qu'avec une seule pièce de la pièce à main.

Le serrage maximum se situe au milieu des languettes (au niveau de la partie conique).

Les fentes sont réalisées jusque dans la partie recevant le ressort afin de permettre aux languettes une flexion plus souple.

La réalisation des figures 9 et 9A est similaire à la précédente, mais avec quatre languettes (132).

Dans ces deux réalisations, il existe deux points d'articulation (133,134) des languettes de serrage aux limites inférieure et supérieure des fentes axiales.

Les fentes sont limitées jusqu'au ressort car celui-ci occasionnerait une contrainte sur les languettes lors du desserrage l'extraction de la fraise en serait alors perturbée.

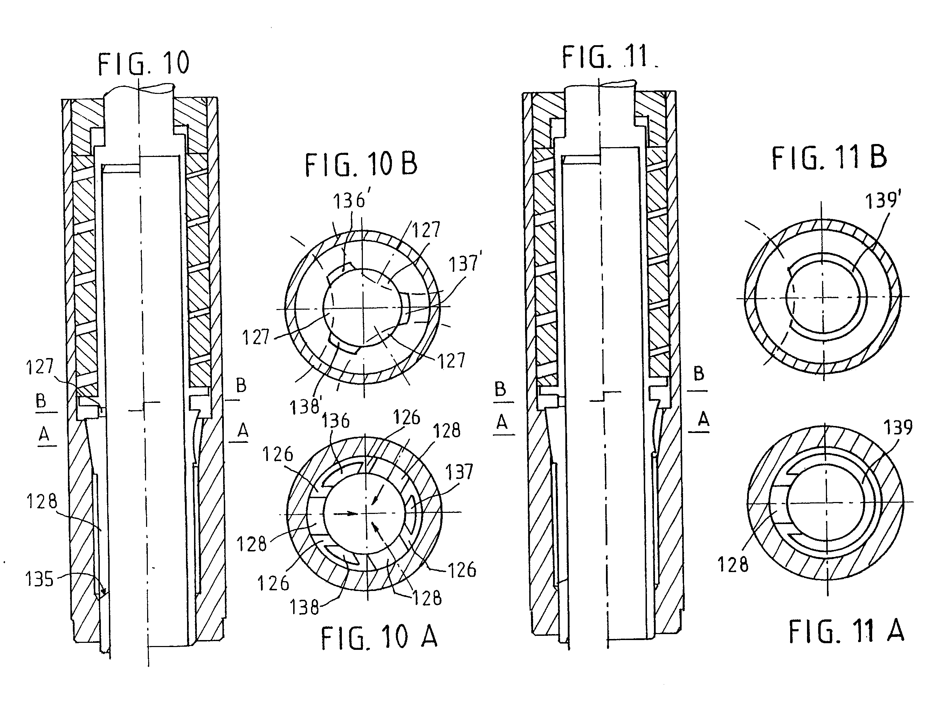

On se référera maintenant aux figures 10 et 10A.

Dans cette réalisation, les fendages (126) sont réalisés en nombre pair et les fendages d'une paire sont rejoints à l'une de leurs extrémités par un fendage transversal (127) par rapport à l'axe de pince, définissant ainsi des bras flexibles (128). La forme conique de la pince et la forme combinée du fût peuvent être judicieusement placées près de l'extrémité fléchissante des bras flexibles (128), ladite forme conique de la pince étant limitée au niveau des bras flexibles par dégagement entre lesdits bras.

Le point d'articulation (135) des languettes se situe à la limite inférieure des fentes axiales. La pince comporte des parties fixes détourées (136',137',138') et (136',137',138').

Le serrage maximum se situe au niveau de la partie conique des languettes, lesquelles sont libres à une extrémité et articulées par le point (135) à l'autre extrémité.

Selon la variante des figures 11, 11A et 11B de même type que celles des figures 10, 10A et 10B, le dispositif de serrage ne comporte qu'un seul bras fléchissant (128). Le reste de la pince est une partie fixe détourée (139,139').

Dans ce cas, le serrage n'est pas concentrique, mais plaque toujours la tige de la fraise contre la face de la pince opposée à la languette.

Dans les variantes des figures 8 à 11, la pince est à l'extrémité avant du fût coulissante dans un diamètre (125) dudit fût afin d'assurer un bon centrage de la pince dans le fût, évitant les balourds.

On se réfère maintenant aux figures 12 et suivantes.

L'ensemble de serrage-desserrage (141) est constitué d'un fût (142) comprenant une partie conique (143), dans laquelle coopèrent une ou plusieurs coquilles (144,145) (ici deux, diamétralement opposées), logées dans un fourreau (146) pouvant se déplacer axialement, de par l'action d'un ressort ou du bouton-poussoir. Un déplacement axial du fourreau vers B (action serrage de par effet du ressort), se traduit par une importante composante radiale sur les coquilles (fonction de la conicité) assurant le serrage ; un déplacement axial du fourreau vers H) (action désserrage par éffet sur bouton-poussoir) libère les coquilles, assurant le desserrage. Les directions B et H sont représentées à la figure 12.

Afin de garantir le serrage d'une queue de fraise, il doit exister un jeu J entre le fourreau et les coquilles représenté à la figure 12C. Lorsque le jeu est nul, les coquilles sont en appui contre le fourreau. Cette position peut donc limiter le diamètre minimum de serrage (position sans tige introduite dans le fourreau).

Afin d'améliorer l'efficacité du serrage, on peut imaginer diverses conceptions de coquilles ; par exemple : fendues en quinconque, monobloc avec détourage... On peut imaginer également deux plans inclinés (146,147) sur le fourreau et les coquilles, comme illustré à la figure 13, favorisant la composante radiale au serrage comme au desserrage.

**Revendications**

1. Dispositif de commande par bouton-poussoir de serrage, respectivement de desserrage, de la queue de fraise d'un instrument de dentisterie dans la tête d'un contre-angle ou d'une pièce à main; le déplacement de bouton-poussoir étant opéré à l'encontre d'une ressort de pression, caractérisé en ce qu'il comporte au moins un élément d'inversion (13,27) recevant le mouvement d'appui sur le bouton poussoir (11) pourle desserrage et le transformant en un mouvement de traction exercé par l'élément d'inversion sur un poussoir (10) commandant une pince de serrage maintenant la queue de l'instrument.

2. Dispositif selon la revendication 1, caractérisé en ce que ledit élément d'inversion est un élément basculant à levier.

3. Dispositif selon la revendication 2, caractérisé en ce que le manche est maintenu par une pince (5) de serrage sollicitée par un ressort de pression (6), par exemple hélicoïdal, qui prend appui d'une part sur une embase (7) mobile et d'autre part sur un siège (8).

4. Dispositif selon l'une quelconque des revendications 2 et 3, caractérisé en ce que la tête comporte une pièce annulaire mobile (9) comportant un épaulement du poussoir (10), ladite pièce étant solidaire en translation de l'embase (7), le déplacement axial de l'équipage (7,9,10) entrainant la compression ou la détente du ressort, donc la libération ou le blocage du manche de l'instrument qui est maintenu par la pince (5), le déplacement de l'ensemble (7,9,10) étant commandé par un bouton-poussoir (11) se déplaçant à l'encontre de l'effort d'un ressort de rappel en position sortie (12).

5. Dispositif selon la revendication4, caractérisé en ce que la liaison entre le bouton (11) et l'ensemble (7,9,10) est réalisé par au moins un levier (13) articulé sur un axe (14), le petit bras (15) du levier sollicitant l'épaulement (10), tandis que le grand bras (16) est soumis à l'action du bouton-poussoir, sur la face intérieure de celui-ci.

6. Dispositif selon la revendication 5, caractérisé en ce qu'il comporte une pluralité de leviers.

7. Dispositif selon la revendication 4, caractérisé en ce qu'il comporte un petit bras (17), un grand bras (18) et un point d'appui qui est une bille (19), un ressort (20) prenant appui sur le grand bras (18), celui-ci étant lui même sollicité par le bouton-poussoir.

8. Dispositif selon la revendication 4, caractérisé en ce qu'il est à levier de type bateau (21) c'est-à-dire comportant une cuvette (22) dans laquelle roule une rotule (23), de préférence les clavettes-bateau étant prolongées par un bras assurant le décentrage des points de contacts par rapport à l'axe fictif de rotation.

9. Dispositif selon la revendication 4, caractérisé en ce que le levier (24) est de type fléau avec un point d'appui (25) qui est un bossage de la pièce support (26).

10. Dispositif selon la revendication 1, caractérisé en ce que l'inversion est réalisée par des billes (27) sollicitées par une rampe (28) du bouton-poussoir et en contact avec une contre-rampe (29) d'une bague (30) commandant l'épaulement (10'), la bille (27) pouvant se déplacer jusque dans un siège (31).

11. Dispositif de serrage et de desserrage de la queue d'un instrument dentaire dans la tête de pièce à main de dentisterie, dispositif du type dans lequel la queue de l'instrument est insérée dans un fût à l'intérieur duquel elle est maintenue par une pince de serrage, selon l'une quelconque des revendications 1 à 10, caractérisé en ce que la pince de serrage (106) est actionnée par une rampe (107) de forme correspondante solidiare d'un poussoir (109) mobile en translation à l'intérieur du fût (108) et dont le déplacement est commandé directement ou indirectement par un bouton-poussoir actionné par l'utilisateur, le poussoir étant rappelé par un ressort de compression (110) prenant appui d'une part sur une embase (112) solidaire du poussoir et d'autre part sur un siège (111) fixe solidaire du fût.

12. Dispositif selon la revendication 11, caractérisé en ce que l'effort de serrage s'accroît avec l'effort de traction.

13. Dispositif selon l'une quelconque des revendications 11 et 12, caractérisé en ce que la pince de serrage (106) est de forme générale conique, la partie basse de la pince coopérant avec une rampe (107) fixe de forme correspondante ménagée dans le fond du fût (103), sur sa face interne.

14. Dispositif selon l'une quelconque des revendications 11 à 13, caractérisé en ce que la pince de serrage (106) est réalisée par fendage longitudinal partiel d'un corps creux de révolution.

15. Dispositif selon la revendication 14, caractérisé en ce que la pince (106) est symétrique.

16. Dispositif selon l'une quelconque des revendications 11 à 15, caractérisé en ce qu'il comporte deux pinces (106) montées en série l'une au dessus de l'autre.

17. Dispositif selon l'une quelconque des revendications 11 à 16, caractérisé en ce que le poussoir (109) est de forme générale cylindrique, qu'il est mobile en translation dans le fût et recouvre partiellement la queue (101) de l'instrument dentaire, le déplacement s'opérant à l'encontre d'un ressort de compression (110) qui prend appui d'une part en partie haute sur un siège (111) solidaire du fût et d'autre part en partie basse sur une embase (112) solidaire du poussoir, venue de matière avec celui-ci.

18. Dispositif selon l'une quelconque des revendications 11 à 17, caractérisé en ce que la partie supérieure du poussoir sortant du fût est munie d'un épaulement (113) rapporté sur celui-ci ou venu de matière avec le poussoir, une traction effectuée sur l'épaulement entrainant le poussoir vers le haut en comprimant le ressort (110) et libérant la pince de serrage pour permettre de dégager l'instrument ou d'en placer un dans la tête de la pièce à main.

19. Dispositif selon l'une quelconque des revendications 11 à 18, caractérisé en ce que le fût est pourvu de perçages permettant à la pression régnant éventuellement dans la pièce à main de s'établir à l'intérieur du dispositif de serrage afin d'éviter la pénétration d'éléments polluants ou de salissures.

20. Dispositif selon la revendication 11, caractérisé en ce que la pince est à serrage unique et qu'elle est monobloc avec le poussoir.

21. Dispositif de serrage et de desserrage de la queue d'un instrument dentaire dans la tête d'une pièce à main de dentisterie selon la revendication 20, caractérisé en ce que la pince est pourvue d'une butée (120) coopérant avec une forme combinée (121) du fût, afin de limiter la course de la pince dans le sens du serrage.

22. Dispositif selon la revendication 21, caractérisé en ce que la pince de serrage (117) est monobloc avec le poussoir et qu'elle est sollicitée par un ressort usiné (140) équilibré, disposé concentriquement au poussoir autour de celui-ci, et que sa longueur est un multiple du pas.

23. Dispositif selon l'une quelconque des revendications 21 et 22, caractérisé en ce que la forme (121) est un épaulement annulaire.

24. Dispositif selon l'une quelconque des revendications 21 à 23, caractérisé en ce que la pince se compose de trois languettes (129,130,131) déterminant entre elles trois fendages longitudinaux (122) qui débouchent aux extrémités de la pince, les languettes de serrage étant articulées à la limite supérieure des fentes axiales en un point (118).

25. Dispositif selon l'une quelconque des revendications 21 à 23, caractérisé en ce que les fendages (123) sont réalisés sur une partie de la pince, sans déboucher aux extrémités de ladite pince mais jusque dans la partie recevant le ressort, que la pince est pourvue d'une forme généralement conique (124) située dans la partie médiane par rapport aux fendages, ladite forme conique (124) coopérant avec une forme conique combinée (125) du fût pour assurer le serrage par déformation des bras (119) définis par les fendages (123).

**26.** Dispositif selon la revendication 25, caractérisé en ce que la pince comporte quatre languettes (132).

**27.** Dispositif selon l'une des revendications 25 et 26, caractérisé en ce que la pince comporte deux points d'articulation (133,134) des languettes de serrage aux limites inférieure et supérieure des fentes axiales.

**28.** Dispositif selon l'une quelconque des revendications 21 à 23, caractérisé en ce que les fendages (126) sont réalisés en nombre pair et les fendages d'un paire sont rejoints à l'une de leurs extrémités par un fendage transversal (127) par rapport à l'axe de la pince, définissant ainsi des bras flexibles (128), que la forme conique de la pince et la forme combinée du fût sont placées près de l'extrémité fléchissante des bras flexibles (128), ladite forme conique de la pince étant limitée au niveau des bras flexibles par dégagement entre lesdits bras, que le point d'articulation (135) des languettes se situe à la limite inférieure des fentes axiales et que la pince comporte des parties fixes détourées (136,137,138) et (136′,137′,138′).

**29.** Dispositif selon l'une quelconque des revendications 21 à 23, caractérisé en ce que le dispositif de serrage ne comporte qu'un seul bras fléchissant (128), le reste de la pince étant une partie fixe détourée (139,139′).

**30.** Dispositif selon l'une quelconque des revendications 21 à 29, caractérisé en ce que la pince est à l'extrémité avant du fût coulissante dans un diamètre (125) dudit fût.

**31.** Dispositif selon la revendication 21, caractérisé en ce que l'ensemble de serrage-desserrage (141) est constitué d'un fût (142) comprenant une partie conique (143) dans laquelle coopèrent une ou plusieurs coquilles (144,145) logées dans un fourreau (146) pouvant se déplacer axialement, de par l'action d'un ressort ou du bouton-poussoir.

**32.** Dispositif selon la revendication 31, caractérisé en ce qu'il reste un jeu J entre le fourreau et les coquilles.

**33.** Dispositif selon l'une quelconque des revendications 31 et 32, caractérisé en ce que les coquilles sont fendues en quinconce.

**34.** Dispositif selon l'une quelconque des revendications 31 à 33, caractérisé en ce que les coquilles sont détourées.

**35.** Dispositif selon l'une quelconque des revendications 31 à 34, caractérisé en ce qu'il existe deux plans inclinés (146,147) sur le fourreau et les coquilles.

FIG. 1

FIG. 2

FIG. 3

FIG. 4

FIG. 5

# FIG. 6

FIG. 7    FIG. 8    FIG. 9

FIG. 7A

129    122    130

122
131    122

FIG. 8A

119    123

FIG. 9A

132

140

117
120
121

118

122

124

125

120

121

133

134

125

A    A

EP 0 421 907 A1

FIG. 10

FIG. 11

FIG. 10 B

136'

127

137'

127

127

138'

B
─
A

B
─
A

127

B
─
A

128

135

136

126

128

126

137

128

128

126

126

138

128

FIG. 10 A

FIG. 11 B

139'

B
─
A

139

128

FIG. 11 A

EP 0 421 907 A1

FIG. 12 B

144   145

A

B   B

A

FIG. 12 C

141

142

H

B

C   C

143

FIG.12

146

FIG. 12 A

146

147

FIG. 13

Office européen
des brevets

**RAPPORT DE RECHERCHE
EUROPEENNE**

Numéro de la demande

**EP 90 47 0046**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-6 461 93  (DÜRHAGER)<br>* Page 2, colonne de gauche, lignes 6-24; figure 1 *<br>− − − | 1-4 | A 61<br>C 1/14 |
| Y | CH-A-3 548 93  (MOSIMANN)<br>* Page 2, lignes 88-111; figure 3 *<br>− − − | 1-4 | |
| A | EP-A-0 135 327  (NAKANISHI)<br>* Page 3, ligne 34 - page 4, ligne 22; figures 1,2 *<br>− − − | 1,3,4 | |
| A | GB-A-6 075 67  (JENSEN)<br>* Page 2, colonne de gauche, lignes 39-61; figures 1,2 *<br>− − − | 1,2,5 | |
| A | FR-A-7 688 11  (ROESSLER)<br>* Page 2, colonne de gauche, lignes 8-31; figures 1,2 *<br>− − − | 10 | |
| A | DE-A-2 905 484  (DENTALWERK BÜRMOOS)<br>* Revendications 1,2,4,8; figures 1,2 *<br>− − − | 11 | |
| A | FR-A-1 001 800  (GARNIER)<br>* Figure 1 *<br>− − − − − | 11 | |

DOMAINES TECHNIQUES
RECHERCHES (Int. Cl.5)

A 61 C
B 23 B

Le présent rapport de recherche a été établi pour toutes les revendications

| Lieu de la recherche | Date d'achèvement de la recherche | Examinateur |
|---|---|---|
| La Haye | 14 novembre 90 | KOUSOURETAS I. |